# EUROPÄISCHE PATENTANMELDUNG

(11) **EP 1 967 763 A1**
(43) Veröffentlichungstag der Anmeldung: **10.09.2008**
(21) Anmeldenummer: 08004117.1
(22) Anmeldetag: 05.03.2008
(51) Int. Cl.: F16H 41/24, F16D 3/77, B23K 26/20

(54) **Mitnehmerscheiben und Verfahren zu deren Herstellung**

(30) Priorität: 07.03.2007 DE 102007011134
(71) Anmelder: Johann Hay GmbH & Co. KG, Automobiltechnik, 55566 Bad Sobernheim (DE)
(72) Erfinder: Wesnigk, Tobias, 55571 Odernheim (DE)
(74) Vertreter: Grünecker, Kinkeldey, Stockmair & Schwanhäusser Anwaltssozietät

(57) **Zusammenfassung**

Die vorliegende Erfindung betrifft eine Mitnehmerscheibe für eine Automatikgetriebe mit einem durch Schweißen mit einem Mitnehmerblech (2) verbundenen Zahnkranz (1) und wenigstens einer durch Schweißen mit dem Mitnehmerblech (2) verbundenen Verdickungsscheibe (4, 5). Die vorliegende Erfindung betrifft ferner ein Verfahren zur Herstellung einer solchen Mitnehmerscheibe. Im Hinblick auf eine wirtschaftliche Herstellung von festen und formgenauen Mitnehmerscheiben wird mit der vorliegenden Erfindung vorgeschlagen, dass der Zahnkranz (1) mit dem Mitnehmerblech (2) einerseits und das Mitnehmerblech (2) mit der wenigstens einen Verdickungsscheibe (4, 5) andererseits durch Strahischweißen, vorzugsweise Laserstrahlschweißen verbunden sind (Fig. 1).

## Beschreibung

Die vorliegende Erfindung betrifft eine Mitnehmerscheibe, wie sie vorwiegend in Automobilen mit Automatikgetriebe engesetzt wird, sowie ein Verfahren zu deren Herstellung.

Eine gattungsgemäße Mitnehmerscheibe umfasst jedenfalls einen Zahnkranz sowie ein Mitnehmerblech, welches an der Innenumfangsfläche des Zahnkranzes angeordnet ist. Des Weiteren weisen übliche Mitnehmerscheiben ein bzw. zwei Verdickungsscheiben auf, die als Decktrennschicht bzw. Verstärkungsscheibe an gegenüberliegenden Seiten des Mitnehmerblechs angeordnet und konzentrisch hierzu mit diesem befestigt sind. Die entsprechenden Verstärkungs- und/oder Distanzscheiben sind in radialer Richtung auf den mittleren Bereich des Mitnehmerblechs beschränkt und umgeben konzentrisch eine mittlere Bohrung der Mitnehmerscheiben, die eine Nabe für die Kurbelwelle bildet.

Eine entsprechende Mitnehmerscheibe ist beispielsweise in der DE 199 05 713 C1 beschrieben. Ein alternatives Beispiel ist in der DE 32 36 321 D2 offenbart.

Die Mitnehmerscheibe dient der Momentübertragung zwischen der Kurbelwelle der Verbrennungskraftmaschine und dem Drehmomentwandler im Falle von Kraftfahrzeugen mit Automatikgetrieben. Der an dem Mitnehmerblech montierte Zahnkranz erhöht und überträgt während des Anlassvorgangs das Drehmoment des Anlassers auf die Kurbelwelle.

Die Verbindung von Zahnkranz und Mitnehmerblech kann durch unterschiedliche Verfahren erfolgen. So können die Teile beispielsweise miteinander verschweißt sein (vgl. DE 199 05 713 C1). Die wenigstens eine im mittleren Teil des Mitnehmerblechs vorgesehene Verdickungsscheibe versteift zum einen das Mitnehmerblech, so dass dieses eine Biegewechselbeanspruchung besser aufnehmen kann. Darüber hinaus verstärkt die wenigstens eine Verdickungsscheibe konzentrisch zu der Nabe vorgesehene Bohrungen, die auch an dem Mitnehmerblech vorgesehen sind und durch welche die Mitnehmerscheibe mit der Kurbelwelle verschraubt werden kann. Des Weiteren wird durch die wenigstens eine Verdickungsscheibe die axiale Lage der Mitnehmerscheibe zwischen der Kurbelwelle und dem Drehmomentwandler festgelegt. Die wenigstens eine Verdickungsscheibe überträgt keine erheblichen Drehmomente, so dass unterschiedliche Möglichkeiten bestehen, die wenigstens eine Verdickungsscheibe mit dem Mitnehmerblech zu verbinden. Bekannt ist beispielsweise das Verschweißen der Verdickungsscheibe an dem Mitnehmerblech (DE 199 05 713). Ebenso gut kann die wenigstens eine Verdickungsscheiben mittels Clinchen, Nieten oder gar Kleben mit dem Mitnehmerblech verbunden sein. Die Verbindung muss lediglich so ausgestattet sein, dass die Mitnehmerscheibe bis zur endgültigen Montage im Bereich des Getriebes durch Verschrauben mit der Kurbelwelle fixiert ist. Danach übernehmen die Kurbelwellenschrauben die Fixierung der wenigstens einen Verdickungsscheibe.

Die DE 199 05 713 C1 beschreibt ein Verfahren, bei welchem alle Bauteile der Mitnehmerscheibe in einem MIG- oder MAG-Verfahren miteinander verbunden werden. Die entsprechenden MIG- oder MAG-Schweißverfahren führen jedoch zu einer hohen Wärmeeinbringung in das Werkstück, welches sich dabei verziehen kann. Des Weiteren besteht das Problem, dass Schweißspritzer die Oberfläche des Werkstücks verunstalten. Dem entsprechend macht das MIG- oder MAG-Schweißverfahren Nachbearbeitungsschritte erforderlich. Des Weiteren ist es notwendig, die durch wenigstens eine Verdickungsscheibe für die Schweißnaht speziell vorzubereiten.

Der folgenden Erfindung liegt das Problem zugrunde, eine Mitnehmerscheibe und ein Verfahren zur Herstellung der selben anzugeben, die zu einer Verbesserung der Qualität und der Wirtschaftlichkeit der Herstellung der Mitnehmerscheibe führen.

Im Hinblick auf das Produkt wird mit der vorliegenden Erfindung eine Mitnehmerscheibe mit den Merkmalen von Anspruch 1 vorgeschlagen. Diese unterscheidet sich von der gattungsbildenden Mitnehmerscheibe dadurch, dass der Zahnkranz mit dem Mitnehmerblech einerseits und das Mitnehmerblech mit der wenigstens einen Verdickungsscheibe andererseits durch Strahlschweißen gefügt sind. Besonders bevorzugt kommt hierbei als Strahlschweißen das Laserstrahlschweißen zum Einsatz.

Beim Strahlschweißen, insbesondere beim Laserstrahlschweißen wird der Effekt des Tiefschweißens genutzt, um eine schmale und tiefe Schweißnaht auszubilden, die das umgebende Material des Werkstücks äußerst gering beeinflusst und nur sehr wenig Wärme in die Naht einbringt. Hieraus resultieren die für das Strahlschweißverfahren geringen thermischen Verzüge der gefügten Komponenten. Darüber hinaus werden beim Strahlschweißen Schweißpickel vermieden. Eine Nachbearbeitung des gefügten Werkstücks kann danach entfallen. Die Nahtvorbereitung an dem Zahnkranz und dem Mitnehmerblech wird derart durchgeführt, dass sich die Naht zum Beispiel im 1-Stoß oder im Überlappstoß ausführen lässt. Entsprechendes gilt für die Nahtvorbereitung zwischen der wenigstens einen Verdickungsscheibe und dem Mitnehmerblech.

Vorzugsweise wird die wenigstens eine Verdickungsscheibe indes mit dem Mitnehmerblech über Heftschweißpunkte verbunden, was jegliche Nahtvorbereitung entbehrlich macht. Auch hier wird der mit dem Strahlschweißen mögliche Tiefschweißeffekt genutzt, um beispielsweise Schweißpunkte zu erzeugen, die die wenigstens eine Verdickungsscheibe, vorzugsweise die beiderseits des Mitnehmerblech angeordneten Scheiben sowie das Mitnehmerblech durchsetzt und so alle Teile ohne thermischen Verzug miteinander verbindet.

Die durch Strahlschweißen gebildete Schweißnaht zwischen dem Mitnehmerblech und dem Zahnkranz kann umfänglich umlaufend ausgebildet sein. Alternativ kann die Schweißnaht auch durch voneinander getrennte Längenabschnitte gebildet sein, die über den Innenumfang des Zahnkranzes vorgesehen sein sollten.

Gemäß einer weiteren bevorzugten Ausgestaltung der vorliegenden Erfindung und abhängig von der Werkstoffpaarung, die durch den Zahnkranz einerseits und durch das Mitnehmerblech andererseits gebildet wird, kann die Schweißnaht unter Verwendung eines Zusatzdrahtes erzeugt werden.

Gemäß einer weiteren bevorzugten Ausgestaltung ist in an sich bekannter Weise das Mitnehmerblech jedenfalls im radial inneren Bereich vorzugsweise zwischen zwei Verdickungsscheiben vorgesehen. Diese beiden Verdickungsscheiben sowie das Mitnehmerblech sind über wenigstens einen Schweißpunkt miteinander verbunden, die die Mitnehmerscheiben und das Mitnehmerblech durchsetzen. Vorzugsweise sind auf dem Umfang mehrere solcher Schweißpunkte verteilt vorgesehen.

Des Weiteren kann der Zahnkranz in besonderer Weise auf das gewählte Schweißverfahren angepasst sein. So kann der Zahnkranz an seiner Innenumfangsfläche eine Anlageschulter aufweisen, an welcher die Mitnehmerscheibe einseitig anliegt und damit in Bezug auf den Zahnkranz einseitig axial fixiert ist. Das so in den Zahnkranz eingelegte Mitnehmerblech kann von der gegenüberliegenden Seite beim Fügen von Mitnehmerblech und Zahnkranz in axialer Richtung gegen die Anlageschulter angedrückt werden. In Andrückrichtung erfolgt dann die Beaufschlagung mit dem Strahl zum Strahlschweißen, so dass die Schweißnaht gegenüberliegend der Anlageschulter ausgebildet ist. Der Effekt des Tiefschweißens wird dabei vorzugsweise genutzt, um die Schweißnaht jedenfalls bis zu der Anlageschulter auszubilden. Die Schweißnaht erstreckt sich dementsprechend im Wesentlichen über die gesamte Dicke des Mitnehmerbleches.

Gemäß einer weiteren bevorzugten Ausgestaltung der vorliegenden Erfindung ist an der der Anlageschulter gegenüberliegenden Seite in etwa höhengleich mit der Mitnehmerscheibe an der Innenumfangsfläche des Zahnkranzes eine Ringschulter ausgeformt. Die zu der Ringschulter führende Innenumfangsfläche des Zahnkranzes kann zum leichteren Einführen des Mitnehmerbleches bei der Herstellung der Mitnehmerscheibe leicht konisch nach Außen abgeschrägt sein, so dass das in den Zahnkranz eingeführte Mitnehmerblech zwangsläufig konzentrisch eingebracht wird. Des Weiteren wird durch die Ringschulter ein zielgenaues Einbringen des Schweißstrahls in den Spalt zwischen der Außenumfangsfläche des Mitnehmerbleches und dem Innenumfang des Zahnkranzes erleichtert, ohne das die Gefahr besteht, das axial außerhalb liegende, also in Richtung des auftreffenden Schweißstrahls vorgelagerte Teile des Zahnkranzes beim Schweißen anschmelzen. Alternativ oder zusätzlich kann der Schweißstrahl relativ zu der Achse der Mitnehmerscheibe nach Außen geneigt auf die Fügestelle gerichtet sein.

Bei der Ausbildung der Schweißnaht zwischen dem Mitnehmerblech und dem Zahnkranz in Teilsegmenten in Umfangsrichtung können die genannten Bauteil "Ringschulter" und "Anlageschulter" auch in Umfangsrichtung abschnittsweise ausgeformt sein. Grundsätzlich ist aber aus fertigungstechnischer Sicht eine rotationssymetrische Ausgestaltung von Ringschulter und Anlageschulter zu bevorzugen.

Im Hinblick auf die Lösung des verfahrensmäßigen Problems wird mit der vorliegenden Erfindung ein Verfahren zur Herstellung einer Mitnehmerscheibe für ein Automatikgetriebe angegeben, bei dem der Zahnkranz wie auch wenigstens eine Verdickungsscheibe durch Schweißen mit einem Mitnehmerblech verbunden werden und welches sich vom Stand der Technik gemäß DE 199 05 713 dadurch unterscheidet, dass der Zahnkranz mit dem Mitnehmerblech einerseits und das Mitnehmerblech mit der wenigstens einen Verdickungsscheibe andererseits durch Strahlschweißen, insbesondere Laserstrahlschweißen verbunden werden.

Gemäß einer bevorzugten Weiterbildung wird bei dem Verfahren die Schweißverbindung zwischen dem Zahnkranz und dem Mitnehmerblech unter Verwendung eines Zusatzwerkstoffes gebildet. Hierdurch kann die Festigkeit der Schweißnaht insbesondere bei Werkstoffpaarungen mit unterschiedlichen Werkstoffen erhöht werden.

Weiterhin bevorzugt wird bei dem Verfahren das Mitnehmerblech zwischen zwei Verdickungsscheiben angeordnet. Diese Bauteile werden danach durch Strahltiefschweißen, vorzugsweise durch Laserstrahltiefschweißen miteinander verbunden, und zwar über wenigstens einen im Überlappstoß ausgeführten Heftpunkt.

Beim Herstellen der Mitnehmerscheibe werden vorzugsweise das Mitnehmerblech, der Zahnkranz und die wenigstens eine Verdickungsscheibe in eine Halterung eingelegt, die alle Bauteile aufnimmt. Die Bauteile werden darin zentriert und fixiert, vorzugsweise durch Klemmung, und anschließend durch Strahltiefschweißen miteinander verschweißt. Dabei kann die Halterung drehend angetrieben werden, was sich insbesondere anbietet, wenn eine vollumfänglich oder jedenfalls in Abschnitten umfänglich ausgebildete Schweißnaht zwischen der Außenumfangsfläche des Mitnehmerblechs und dem Innenumfang des Zahnkranzes ausgebildet werden soll. Es hat sich aber auch herausgestellt, dass beim Verschweißen der wenigstens einen Verdickungsscheibe mit dem Mitnehmerblech eine geringfügige Relativbewegung, die vorzugsweise eine rotierende Relativbewegung ist, zwischen dem Laser und dem Werkstück erfolgen sollte, wenn eine erhöhte Haltbarkeit der Schweißnaht erreicht werden soll. Bei dieser Verfahrensführung ergibt sich ein Schweißpunkt, der eine gewisse, wenn auch geringe Länge hat. Diese ist aber üblicherweise geringer als die Einschweißtiefe, so dass die Bezeichnung der Schweißverbindung als "Schweißpunkt" weiterhin gerechtfertigt ist.

Die vorliegende Erfindung wird nachfolgend anhand eines Ausführungsbeispiels in Verbindung mit der Zeichnung näher erläutert. Diese zeigen:
- Fig. 1: eine Draufsicht auf ein Ausführungsbeispiel einer Mitnehmerscheibe;
- Fig. 2: eine Schnittansicht entlang der Linie II - II der Darstellung gemäß Fig. 1;
- Fig. 3: eine vergrößerte Schnittdarstellung der Verbindungsstelle zwischen dem Zahnkranz und dem Mitnehmerblech und
- Fig. 4: eine vergrößerte Schnittdarstellung der Verbindungsstelle zwischen dem Mitnehmerblech und den beiden Verstärkungsscheiben im Bereich der Narbe der Mitnehmerscheibe.

Das in der Zeichnung gezeigte Ausführungsbeispiel weist einen Zahnkranz 1 und eine Mitnehmerblech 2 auf. Das Mitnehmerblech 2 bildet eine Nabe 3 aus, die durch beiderseits angeordneten Verdickungsscheiben 4, 5 verstärkt ist.

Benachbart zu dem Zahnkranz 1 weist das Mitnehmerblech 2 auf dem Umfang verteilt angeordnete Bohrungen 6 für die Verschraubung mit einem Drehmomentwandler auf. Konzentrisch um die Narbe 3 sind weitere Bohrungen 7 für die Verschraubung der Mitnehmerscheibe an der Kurbelwelle vorgesehen. Auch die weiteren Bohrungen 7 sind auf dem Umfang verteilt angeordnet.

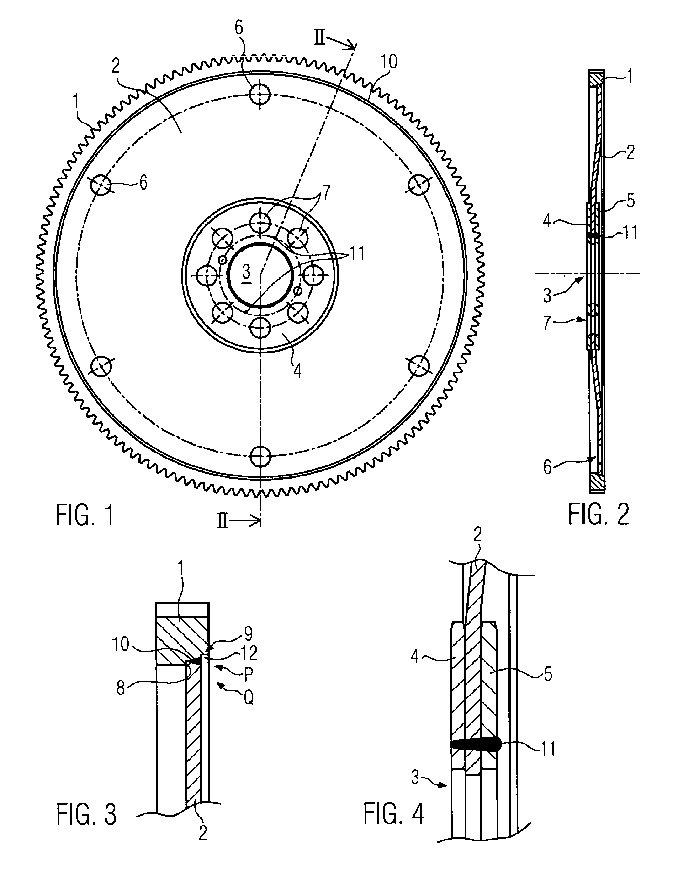

Zur Verbindung mit dem Mitnehmerblech 2 ist die Innenumfangsfläche des Zahnkranzes 1 in besonderer Weise konturiert (vgl. Fig. 3). Der Zahnkranz 1 bildet an seiner Innenumfangsfläche eine Anlageschulter 8 aus, die sich in etwa in axialer Richtung in der Mitte des Zahnkranzes 1 befindet. Die Anlageschulter 8 erstreckt sich von einem Innenradius des Zahnkranzes 1, der kleiner als der Außenradius des Mitnehmerbleches 2 ist, bis zu einem mittleren Innenradius, der größer als der Außenradius des Mitnehmerbleches 2 ist. Die durch die Anlageschulter 8 gebildete Anlagefläche erstreckt sich in radialer Richtung in Bezug auf den Zahnkranz 1. Mit in axialer Richtung Abstand hierzu ist eine weitere Schulter als Ringschulter 9 ausgebildet. Diese Ringschulter 9 hat einen axialen Abstand von der Anlageschulter 8, der in etwa der Dicke des Mitnehmerbleches 2 entspricht. Das an der Anlageschulter 8 anliegende Mitnehmerblech 2 liegt dementsprechend mit seiner anderen Oberfläche in etwa höhengleich mit der Ringschulter 9. Eine von der Stirnseite des Zahnkranzes 1 abgehende und bis zu der Ringschulter 9 reichende Innenumfangsteilfläche 12 hat einen Innenradius, der größer als der äußere Radius der Anlageschulter 8 ist. Es ergibt sich danach ein gestufter Verlauf ausgehend von dem kleinsten Innenradius des Zahnkranzes 1 über die Anlageschulter 8 als erste Stufe und die Ringschulter 9 als zweite Stufe zu der anderen Stirnseite des Zahnkranzes 1.

Durch diesen gestuften Verlauf ist die durch den Zahnkranz 1 benachbart zu dem Mitnehmerblech 2 gebildete Fläche in etwa höhengleich mit dem Mitnehmerblech 2. Ein aus der Schweißrichtung (gezeichnet mit Pfeil P) auf die Phasengrenze zwischen dem Zahnkranz 1 und dem Mitnehmerblech 2 auftreffender Laserstrahl schmilzt dementsprechend zwei höhengleiche Flächensegmente der zu verbindenden Bauteile auf. Der Laserstrahl kann in axialer Richtung in Bezug auf den Zahnkranz 1 auftreffen, d. h. rechtwinklig zu den aufzuschmelzenden Flächen. Er kann aber auch leicht schräg ausgerichtet sein, insbesondere in Richtung auf die Mittellängsachse des Zahnkranzes 1 geneigt ausgereichtet sein, wie dies in Figur 3 mit dem Pfeil Q angedeutet ist.

Wie die Schnittansicht gemäß Fig. 3 erkennen lässt, bewirkt der Effekt des Tiefschweißens eine Schweißnaht 10, die von der zunächst von dem Strahl beaufschlagten Oberfläche bis hin zu der Anlageschulter 8 reicht. Es ergibt sich eine innige Verbindung zwischen dem Zahnkranz 1 und der Mitnehmerscheibe 2, ohne jedoch den Nachteil eines thermisch induzierten Verzugs der beiden Bauteile. Wie Fig. 1 erkennen lässt, läuft die Schweißnaht 10 an der Phasengrenze zwischen dem Mitnehmerblech 2 und dem Zahnkranz 1 in Umfangsrichtung um.

Die beiden Verdickungsscheiben 4, 5 sind über zwei in etwa diametral in Bezug auf die Achse des Zahnkranzes 1 gegenüberliegende Schweißpunkte 11 miteinander verbunden, die als Heftnaht im Überlappstoß ausgebildet sind. Die jeweiligen Schweißpunkte 11 durchsetzen die beiden Verdickungsscheiben 4, 5 wie auch das Mitnehmerblech 2. Die Schweißpunkte 11 sind mit der selben Schweißrichtung wie die ringförmige Schweißnaht 10 ausgebildet, regelmäßig durch den selben Laserstrahl.

Bei der Herstellung des gezeigten Ausführungsbeispiels wird üblicher Weise zunächst der Zahnkranz 1 und die untere Verdickungsscheibe 4 in eine Halterung eingelegt. Danach wird das Mitnehmerblech 2 in den Zahnkranz 1 eingelegt und gegen die Anlageschulter 8 angelegt. Schließlich wird die andere obere Verdickungsscheibe 5 auf das Mitnehmerblech 2 aufgelegt. Die Verdickungsscheiben 4, 5 werden konzentrisch zu der Narbe 3 angeordnet. Danach wird die eingestellte Anordnung sämtlicher Bauteile zueinander fixiert.

Nun werden vorzugsweise über einen Laser die beiden Schweißpunkte 11 erzeugt. Danach kann die Fixierung der Verdickungsscheiben 4, 5 durch die Halterung aufgehoben werden. Die Halterung ist vorzugsweise drehbar angeordnet, so dass bei dem nachfolgenden Fügen von Zahnkranz 1 und Mitnehmerblech 2 der Zahnkranz 1 zusammen mit dem Mitnehmerblech 2 gedreht werden kann, während der Laser ortsfest beleibt. Hierdurch wird die ringförmige Schweißnaht 10 zwischen der Außenumfangsfläche des Mitnehmerbleches 2 und dem Zahnkranz 1 ausgebildet.

Das so hergestellte Bauteil lässt sich wirtschaftlich jedoch ohne thermischen Verzug herstellen. Die Bearbeitungsschritte sind optimiert. Es besteht ferner keine Gefahr, das Schweißpickel die Mitnehmerscheibe beeinträchtigen.

### Bezugszeichenliste

- 1: Zahnkranz
- 2: Mitnehmerblech
- 3: Nabe
- 4: Verdickungsscheibe
- 5: Verdickungsscheibe
- 6: Bohrung für Wandleranschraubung
- 7: Bohrung für Kurbelwellenanschraubung
- 8: Anlageschulter
- 9: Ringschulter
- 10: Schweißnaht
- 11: Schweißpunkt
- 12: Innenumfangsteilfläche
- P,Q: Schweißrichtung

## Patentansprüche

1. Mitnehmerscheibe mit einem durch Schweißen mit einem Mitnehmerblech (2) verbunden Zahnkranz (1) und wenigstens einer durch Schweißen mit dem Mitnehmerblech (2) verbundenen Verdickungsscheibe (4, 5),
**dadurch gekennzeichnet,**
**dass** der Zahnkranz (1) mit dem Mitnehmerblech (2) einerseits und das Mitnehmerblech (2) mit der wenigstens einen Verdickungsscheibe (4, 5) andererseits durch Strahlschweißen, vorzugsweise Laserstrahlschweißen verbunden sind.

2. Mitnehmerscheibe nach Anspruch 1, **dadurch gekennzeichnet, dass** der Zahnkranz (1) und das Mitnehmerblech (2) durch eine am Außenumfang des Mitnehmerblechs (2) vorgesehenen Schweißnaht (10) miteinander verbunden sind.

3. Mitnehmerscheibe nach Anspruch 2, **dadurch gekennzeichnet, dass** die Schweißnaht in Umfangsrichtung durchlaufend ausgebildet ist.

4. Mitnehmerscheibe nach Anspruch 1 oder 2, **dadurch gekennzeichnet, dass** die Schweißnaht durch in Umfangsrichtung voneinander getrennte Längenabschnitte ausgebildet ist.

5. Mitnehmerscheibe nach einem der vorherigen Ansprüche, **dadurch gekennzeichnet, dass** die Schweißnaht (10) zwischen dem Zahnkranz (1) und dem Mitnehmerblech (2) unter Verwendung eines Zusatzwerkstoffs gebildet ist.

6. Mitnehmerscheibe nach einem der vorherigen Ansprüche, **dadurch gekennzeichnet, dass** zwei Verdickungsscheiben (4, 5) das Mitnehmerblech (2) zwischen sich aufnehmen und über wenigstens einen die Mitnehmerscheiben (4, 5) und das Mitnehmerblech (2) durchsetzenden Schweißpunkt (11) miteinander verbunden sind.

7. Mitnehmerscheibe nach Anspruch 6, **dadurch gekennzeichnet, dass** der Schweißpunkt (11) im Überlappstoß ausgebildet ist.

8. Mitnehmerscheibe nach einem der vorherigen Ansprüche, **dadurch gekennzeichnet, dass** das Mitnehmerblech (2) an einer an der Innenumfangsfläche des Zahnkranzes (1) ausgebildeten Anlageschulter (8) anliegt und das die Schweißnaht (10) gegenüberliegend der Anlageschulter (8) ausgebildet ist.

9. Mitnehmerscheibe nach Anspruch 8, **dadurch gekennzeichnet, dass** die Schweißnaht (10) bis zu der Anlageschulter (8) reicht.

10. Mitnehmerscheibe nach Anspruch 8 oder 9, **dadurch gekennzeichnet, dass** mit Abstand zu der Anlageschulter (8) eine Ringschulter (9) an der Innenumfangsfläche des Zahnkranzes (1) ausgeformt ist, die in etwa höhengleich mit der Oberfläche des Mitnehmerbleches (2) ist.

11. Mitnehmerscheibe nach Anspruch 10, **dadurch gekennzeichnet, dass** die Schweißnaht (10) zwischen dem Zahnkranz (1) und Mitnehmerblech (2) als Überlappstoß ausgebildet ist.

12. Mitnehmerscheibe nach einem der Ansprüche 1 bis 4, **dadurch gekennzeichnet, dass** die Schweißnaht (10) zwischen dem Zahnkranz (1) und Mitnehmerblech (2) als I-Stoß ausgebildet ist.

13. Verfahren zur Herstellung einer Mitnehmerscheibe für ein Automatikgetriebe, bei welchem sowohl ein Zahnkranz (1) als auch wenigstens eine Verdickungsscheibe (4) durch Schweißen mit einem Mitnehmerblech (2) verbunden werden,
**dadurch gekennzeichnet,**
**dass** der Zahnkranz (1) mit dem Mitnehmerblech (2) einerseits und das Mitnehmerblech (2) mit der wenigstens einen Verdickungsscheibe (4, 5) andererseits durch Strahlschweißen, vorzugsweise Laserstrahlschweißen verbunden werden.

14. Verfahren nach Anspruch 13, **dadurch gekennzeichnet, dass** die Schweißverbindung zwischen dem Zahnkranz (1) und dem Mitnehmerblech (2) unter Verwendung eines Zusatzwerkstoffes ausgeführt wird.

15. Verfahren nach Anspruch 13 oder 14, **dadurch gekennzeichnet, dass** das Mitnehmerblech (2), der Zahnkranz (1) und die wenigstens eine Verdickungsscheibe (4) in eine alle Bauteile aufnehmende Halterung eingelegt werden und dass die hierin eingelegten Bauteile in der Halterung zentriert, fixiert und miteinander verschweißt werden.

16. Verfahren nach einem der Ansprüche 13 bis 15, **dadurch gekennzeichnet, dass** beim Verschweißen der wenigstens einen Verdickungsscheibe (4, 5) mit dem Mitnehmerblech (2) eine geringfügige Relativbewegung zwischen dem Schweißstrahl und dem Werkstück erfolgt.

17. Verfahren nach Anspruch 15 und 16, **dadurch gekennzeichnet, dass** die Halterung drehend angetrieben wird, so dass sich eine drehende Relativbewegung zwischen dem Werkstück und dem Schweißstrahl ergibt.

18. Verfahren nach einem der Ansprüche 13 bis 17, **dadurch gekennzeichnet, dass** die Schweißverbindung zwischen dem Zahnkranz (1) und dem Mitnehmerblech (2) im Überlappstoß gebildet wird.

19. Verfahren nach einem der Ansprüche 13 bis 17, **dadurch gekennzeichnet, dass** die Schweißverbindung zwischen dem Zahnkranz (1) und dem Mitnehmerblech (2) im I-Stoß gebildet wird.

20. Verfahren nach einem der Ansprüche 13 bis 19, **dadurch gekennzeichnet, dass** die Schweißverbindung zwischen der wenigstens einen Verdickungsscheibe (4; 5) und dem Mitnehmerblech (2) durch Strahltiefschweißen, vorzugsweise Laserstrahltiefschweißen als Heftpunkt im Überlappstoß ausgeführt wird.
